# EUROPEAN PATENT APPLICATION

(11) **EP 4 625 943 A2**
(43) Date of publication of application: **01.10.2025**
(21) Application number: 25159976.7
(22) Date of filing: 25.02.2025
(51) Int. Cl.: H04L 67/025

(54) **MULTI DEVICE MEDIA MANAGEMENT**

(30) Priority: 27.03.2024 IN 202441024398; 28.03.2024 US 202418620311
(71) Applicant: Intel Corporation, Santa Clara, CA 95054 (US)
(72) Inventor: SRIVASTAV, Abhishek, Santa Clara, 95054 (US); KAPILA, Smit, Santa Clara, 95054 (US); POTLURI, Srikanth, Santa Clara, 95054 (US); LIM, Min Suet, Santa Clara, 95054 (US); GARAGA, Praveen, Santa Clara, 95054 (US); MANEPALLI, Sangeeta, Santa Clara, 95054 (US); BIRNBAUM, David, Santa Clara, 95054 (US)
(74) Representative: Rummler, Felix

(57) **Abstract**

Systems, apparatus, articles of manufacture, and methods are disclosed for multi device media management. An example electronic device disclosed herein includes interface circuitry to obtain a notification packet from a client device; machine readable instructions; and at least one processor circuit to be programmed by the machine readable instructions to: to identify a subsystem of the electronic device to be controlled based on the notification packet; and change an operating parameter of the subsystem based on the notification packet.

## Description

### RELATED APPLICATION

This patent claims priority to Indian Provisional Patent Application No. 202441024398, which was filed on March 27, 2024. Indian Provisional Patent Application No. 202441024398 is hereby incorporated herein by reference in its entirety.

### BACKGROUND

Users of electronic devices often pair more than one device together. Even with paired devices, users often need to take action to manage media across the devices.

### BRIEF DESCRIPTION OF THE DRAWINGS

FIG. 1 is a block diagram of an example environment in which media is handled between two example devices constructed in accordance with teachings of this disclosure.
FIG. 2 is a block diagram of an example notification packet transmitted by one or more of the devices of FIG. 1.
FIG. 3 is a block diagram of an example implementation of the payload of the example notification packet of FIG. 2.
FIG. 4 is a flowchart representative of example machine readable instructions and/or example operations that may be executed, instantiated, and/or performed by example programmable circuitry to implement the notification abstraction circuitry of the host device of FIG. 1.
FIG. 5 is a flowchart representative of example machine readable instructions and/or example operations that may be executed, instantiated, and/or performed by example programmable circuitry to implement the notification abstraction circuitry of the client device of FIG. 1.
FIG. 6 is a block diagram of an example processing platform including programmable circuitry structured to execute, instantiate, and/or perform the example machine readable instructions and/or perform the example operations of FIGS. 4 and 5 to implement the notification abstraction circuitry of FIG. 1.
FIG. 7 is a block diagram of an example implementation of the programmable circuitry of FIG. 6.
FIG. 8 is a block diagram of another example implementation of the programmable circuitry of FIG. 6.

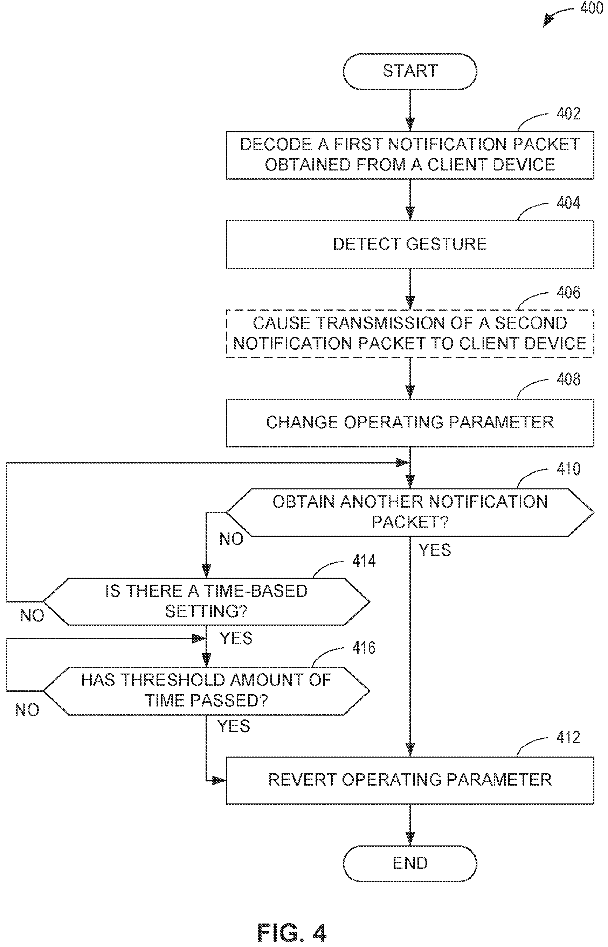

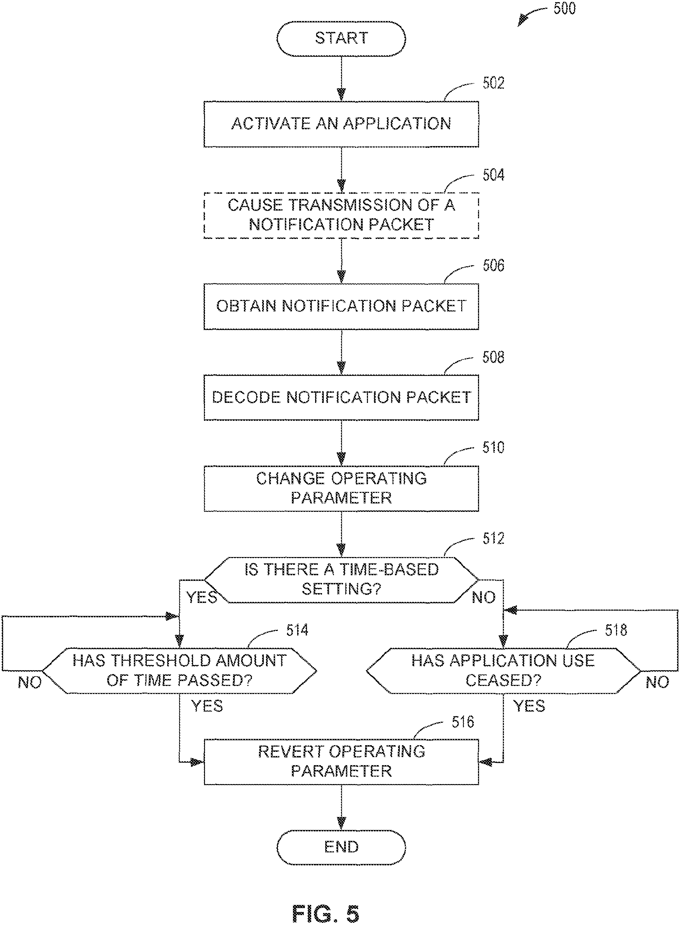

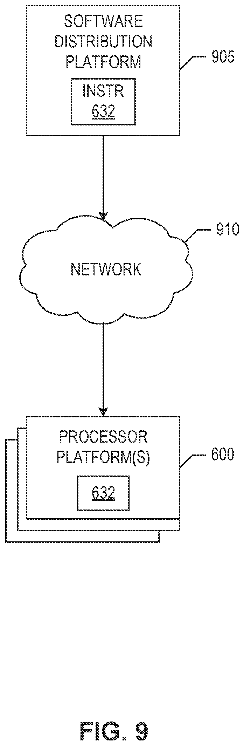

FIG. 9 is a block diagram of an example software, firmware, and/or instructions distribution platform (e.g., one or more servers) to distribute software, instructions, and/or firmware (e.g., corresponding to the example machine readable instructions of FIGS. 4 and 5) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale. Instead, the thickness of the layers or regions may be enlarged in the drawings.

### DETAILED DESCRIPTION

Examples disclosed herein intelligently manage media during collaboration between two or more electronic devices. A user may operate multiple electronic devices. For example, a user may use a personal computer at the same time as a mobile phone and/or Bluetooth headset. If the user is participating in a video conference through the personal computer when a call is received on the mobile phone, the audio of the headset may switch to the call without any notification to the user. This switch could cause the user to miss discussion presented in the video conference on the personal computer. Also, the user would typically have to manually mute the personal computer and/or switch off the camera to answer the call. Examples disclosed herein provide a contextually aware, intelligent, and automatic control of operating parameters of the electronic devices based on applications running on the electronic devices. For example, a personal computer may be muted and have its camera automatically (i.e., without user action) turned off in response to notification of a call being received on a mobile phone. In some examples, the changes in operating parameters of the electronic devices are effected in accordance with user defined settings. In some such examples, a user can define specific operating parameters to change and to what level based on different applications of the electronic devices.

Examples disclosed herein include an example notification abstraction layer in corresponding ones of the electronic devices. The notification abstraction layer creates notification packets to share between electronic devices and also decodes notification packets shared between the electronic devices. The notification packets contain information related to managing media of the paired electronic devices and/or information relating to operating parameters to change based on operation of the paired electronic devices.

In examples disclosed herein, electronic devices may be referred to as a "host" device or a "client" device. In some examples, the host device and the client device are interchangeable. The terms "host" and "client" are used to distinguish a first electronic device and a second electronic device that communicate and may, for example, be paired using a communication protocol such as Bluetooth. Either or both of the host device or the client device can be any type of electronic device such as, for example, a personal computer, a laptop, a tablet, a smartphone, a mobile phone, a smart watch, a headset, glasses, googles, a virtual reality display, a gaming console, a television, a car, a server, a workstation, an Internet of Things device, and/or other type of electronic device. In some examples, the host device and the client device are a same type of device. In other examples, the host device and the client device are different types of devices. Also, examples disclosed herein include one host device and one client device. In other examples, there may be more than two electronic devices that are in communication (e.g., pair, in a communication session via a network connection, in collaboration, etc.).

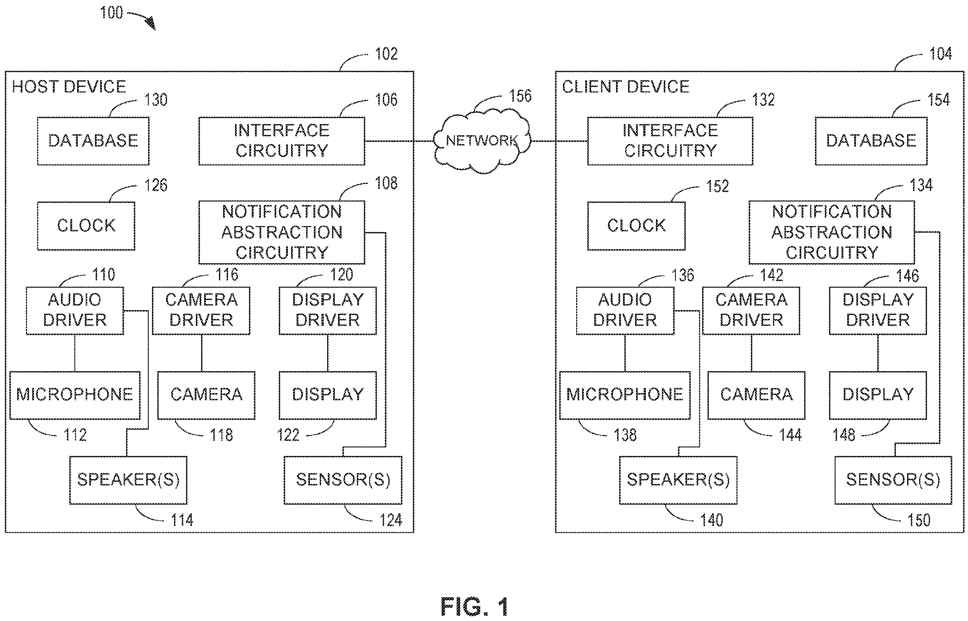

FIG. 1 is a block diagram of an example environment 100 in which an example host device 102 is in communication with (e.g., paired with) an example client device 104. The host device 102 include example interface circuitry 106, example notification abstraction circuitry 108, an example audio driver 110, an example microphone 112, one or more example speaker(s) 114, an example camera driver 116, an example camera 118, an example display driver 120, an example display 122, one or more example sensor(s) 124, an example clock 126, and an example database 130. Similarly, the client device 104 includes example interface circuitry 132, example notification abstraction circuitry 134, an example audio driver 136, an example microphone 138, one or more example speaker(s) 140, an example camera driver 142, an example camera 144, an example display driver 146, an example display 148, one or more example sensor(s) 150, an example clock 152, and an example database 154. In some examples, the host device 102 and/or the client device 104 may include less than the components shown. For example, a client device may not have a camera depending on what type of electronic device the client device is.

Notification packets are shared between the host device 102 and the client device 104. Descriptions of the host device 102 provided herein may also apply to the client device 104 and vice versa.

The notification abstraction circuitry 108 of the host device 102 and the notification abstraction circuitry 134 of the client device 104 are part of notification abstraction layers on the respective host device 102 and the client device 104. In some examples, the notification abstraction layers are part of the host device 102 and the client device 104 application stacks. The notification abstraction circuitry 108 of the host device 102 and the notification abstraction circuitry 134 of the client device 104 implement notification management algorithms to create notifications in the form of notification packets and decode notification packets shared between the host device 102 and the client device 104 to manage, for example, media presented at one or both of the host device 102 and/or the client device 104. The notification packets are shared between the host device 102 and the client device 104 via, for example, the interface circuitry 106 of the host device 102 and the interface circuitry 132 of the client device 104 via a network 156 or via direct communication using one or more communication protocols.

The notification abstraction layers function as an application layer for different driver frameworks such as, for example, audio, camera, display, sensors, etc. Depending on the context of the notification packet, the notification abstraction circuitry 108, 134 invokes different subsystem, as disclosed herein.

As part of notification abstraction layers, the notification abstraction circuitry 108 of the host device 102 and the notification abstraction circuitry 134 of the client device 104 facilitate user access to network services, facilitate securing data transmission across the network 156, and/or incorporate security protocols that safeguard data integrity, confidentiality, and/or authentication.

In some examples, client device 102 may start operation of an application. For example, if the client device 102 is a mobile phone, one application may be a telecommunications application to support an incoming call. The notification abstraction circuitry 134 of the client device 104 creates a notification packet in response to an event such as the incoming call. The notification packet is sent to the host device 102 via the interface circuitry 106, 132. The notification abstraction circuitry 108 of the host device 102 parses or decodes the notification packet to extract information indicative of an operating parameter of a subsystem to change, modify, and/or adjust based on the notification. In some examples, the operating parameter to change can be customized by the user. In some such examples, more than one operating parameter across one or more devices may be changed.

For example, the operating parameter to change may be an audio parameter of the host device 102. In such examples, the notification abstraction circuitry 108 of the host device 102 invokes the audio driver 110 of the host device to control the microphone 112 and/or one or more of the speaker(s) 114 to effect a change in an audio parameter. For example, the audio driver 110 may mute the microphone 112, unmute the microphone 112, decrease a volume of the speaker(s) 114 (e.g., by 5%, 10%, etc.), turn off one or more of the speaker(s) 114, increase a volume of the speaker(s) 114 (e.g., by 5%, 10%, etc.), turn on one or more of the speaker(s) 114, etc.

In some examples, the operating parameter to change may be a video parameter of the host device 102. In such examples, the notification abstraction circuitry 108 of the host device 102 invokes the camera driver 116 of the host device to control the camera 118 to effect a change in a video parameter. For example, the camera driver 116 may shut the camera 118 off or turn the camera 118 on.

In some examples, the operating parameter to change may be a display parameter of the host device 102. In such examples, the notification abstraction circuitry 108 of the host device 102 invokes the display driver 120 of the host device to control the display 122 to effect a change in a display parameter. For example, the display driver 120 may increase or decrease a display brightness (e.g., by 5%, 10%, etc.). Additionally or alternatively, in some examples, the operating parameter to change may be a background display associated with an image captured by the camera 118 (e.g., to suite a context of the caller such as a business context or a personal context).

In some examples, the operating parameter to change may be associated with one of the other sensor(s) 124. Other sensors include, for example, proximity sensors, temperature sensors, gyroscope sensors, tilt sensors, accelerometers, pressure sensors, infrared sensors, motion sensors, etc. In such examples, the notification abstraction circuitry 108 of the host device 102 invokes drivers and/or other associated components to effect the parameter change in the sensor(s)124.

In some examples, the operating parameter to change may be associated with the client device 102. For example, the notification abstraction circuitry 108 of the host device 102 may receive a first notification packet from the client 102 indicative of use of an application on the client 102 and, in response, prepare a second notification packet to send back to the client 102. The second notification packet may include information to change an operating parameter of the client device 102. For example, the second notification packet may include information to mute the ringing of the client device when there is an incoming call and/or to send the call to voicemail. In such example, the notification abstraction circuitry 134 of the client device 104 decodes the second notification packet and invokes the audio driver 136 of the client device 104 to mute the speaker(s) 140 of the client device 104.

In some examples, the change to the operating parameter is to occur for the duration of use of the application that prompted the notification packet. For example, the notification abstraction circuitry 134 of the client device 104 may send a second notification to the host device 102 when use of the application that prompted the first notification ceases. In response to the second notification packet, the notification abstraction circuitry 108 of the host device 102 reverts the operating parameter that was previously changed.

In some examples, the change to the operating parameter is to occur for a specified duration of time. The duration may be specified in the notification packet. For example, the notification abstraction circuitry 134 of the client device 104 may send a notification to the host device 102 that there is an incoming call to the client 102. In response, the client device 102 may be muted, as disclosed above based on a second notification packet sent from the host device 102. The second notification packet may indicate that the client device 104 is to be muted for 30 seconds (or some other time period), after which the client device 104 is not muted. In some examples, the user specifies or otherwise customizes the duration. The clocks 126, 152 may be used to measure the time. Additionally or alternatively, in some examples, the client device 102 may be muted until another event occurs such as, for example receipt of a message and/or use of another application.

In some examples, a user gesture is detected before an operating parameter is changed. For example, use of an application may begin on the client device 104 and a notification packet is sent the host device 102, as disclosed herein. A notification may be presented to the user (e.g., displayed on the display 122 or presented aurally via the speaker(s). The user then makes a gesture that is detected by the camera 118 before the notification abstraction circuitry 108 of the host device 102 invokes any components to effect change in an operating parameter. For example, a user may make a thumbs-up sign to indicate approval of the operating change. In another example, a user may hold up one finger to signal a momentary pause. For example, a user can hold up one finger to indicate a pause on the host device 102 (e.g., to mute audio and/or turn off a camera) to answer a call on the client device 104. In some examples, artificial intelligence is used to detect and interpret the gesture.

Different routines for different operating parameter changes can be established by the user. The routines can be updated as the user desires. The routines can be saved one or more of the respective databases 130, 154.

As disclosed herein, the notification abstraction layers including the notification abstraction circuitry 108 of the host device 102 and the notification abstraction circuitry 134 of the client device 104 are responsible for generating the notification packets to be send to either side - i.e., from the host device 102 to the client device 104 and/or from the client device 104 to the host device 102. The notification abstraction circuitry 108 of the host device 102 and the notification abstraction circuitry 134 of the client device 104 also are responsible for parsing or decoding the notification packets and taking action with respect to different subsystem frameworks, as disclosed herein.

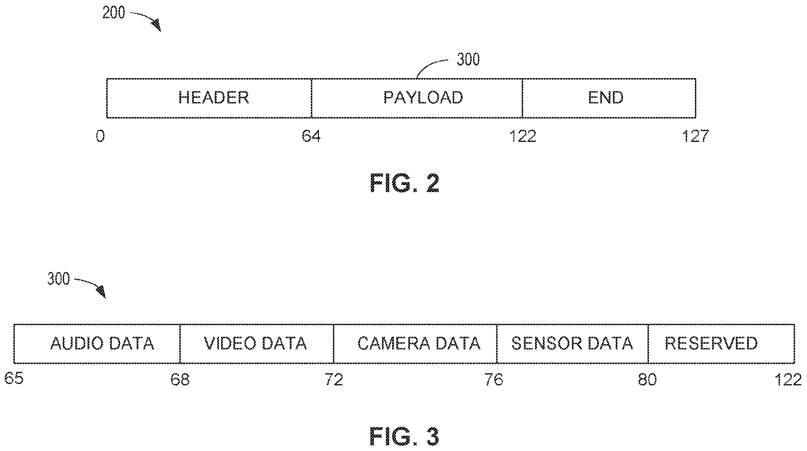

FIG. 2 is a block diagram of an example notification packet 200, which may be generated and/or transmitted by/from the host device 102 to the client device 104 (or vice versa). The example notification packet 200 is a 128-bit packet that includes a header, payload, and end. In the illustrated example, the header includes bits 0-64. The payload includes bits 65-122. The end includes bits 123-127. Other amounts of bits and/or distribution of bits among the header, payload, and end may be used in other examples.

FIG. 3 is a block diagram of an example implementation of the payload 300 of the example notification packet 200. The example payload 300 includes subsystem data. The subsystem data is information related to operating parameter changes for the associated subsystem. Different notification packets based on different application uses on the client device 104 (or host device 102) will have different subsystem data. In the illustrated example, the payload 300 includes audio data from bits 65-68, video data from bits 69-72, camera data from bits 73-76, sensor data from bits 77-80, and bits 81-122 are reserved. The reserved bits can be used to include additional subsystem data. Other distribution of bits among the subsystems may be used in other examples.

An example implementation of a payload for audio data is shown in Table 1.

**TABLE 1**

| **Bits** | **Payload and meaning** |
|---|---|
| Volume [66:65] | 00 = Mute |
| | 01 = 5% decrease |
| | 10 = 25% increase |
| | 11 = No change |
| Reserved [72:67] | Reserved |

In this example, the payload bits 66 and 65 are used to indicate how the operating parameter of volume should be change upon receipt of a notification packet with this payload 300. If the bits are 00, the volume is to be muted. If the bits are 01, the volume is to be decreased by 5%. If the bits are 10, the volume is to be increased by 25%. If the bits are 11, the volume is not to be changed. In some example, the reserved bits can be used for restoring the volume to original volume after the cessation of the application (e.g., call terminations). In some examples, the reserved bits can be used to for managing audio end points such as, for example, an onboard speaker, a microphone, Bluetooth, an earpiece, headphones, etc.

The notification abstraction circuitry 108, 134 of FIG. 1 may be instantiated (e.g., creating an instance of, bring into being for any length of time, materialize, implement, etc.) by programmable circuitry such as a Central Processor Unit (CPU) executing first instructions. Additionally or alternatively, the notification abstraction circuitry 108, 134 of FIG. 1 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 1 may, thus, be instantiated at the same or different times. Some or all of the circuitry of FIG. 1 may be instantiated, for example, in one or more threads executing concurrently on hardware and/or in series on hardware. Moreover, in some examples, some or all of the circuitry of FIG. 1 may be implemented by microprocessor circuitry executing instructions and/or FPGA circuitry performing operations to implement one or more virtual machines and/or containers.

In some examples, the notification abstraction circuitry 108, 134 is instantiated by programmable circuitry executing notification abstraction instructions and/or configured to perform operations such as those represented by the flowchart(s) of FIGS. 4 and 5.

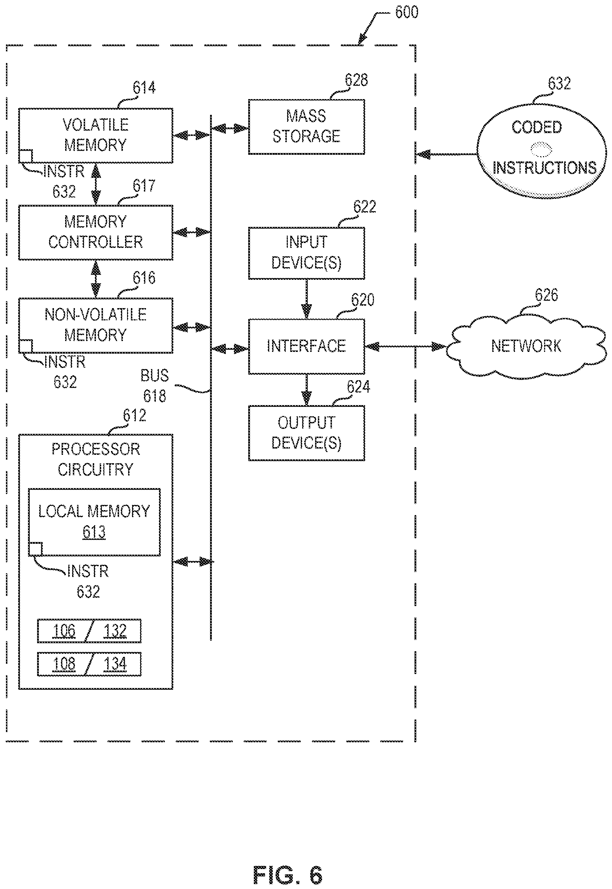

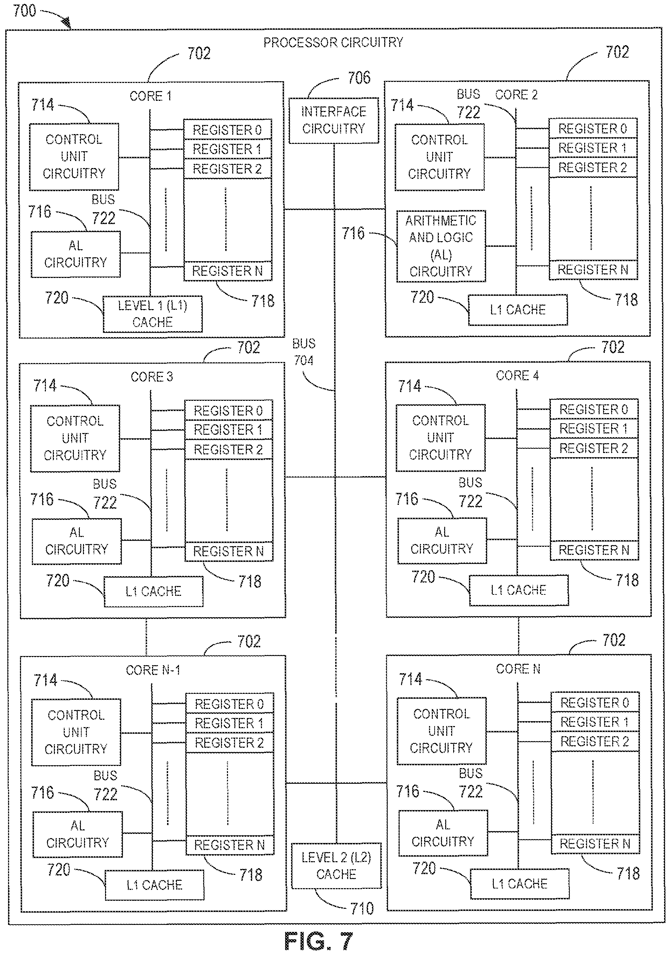

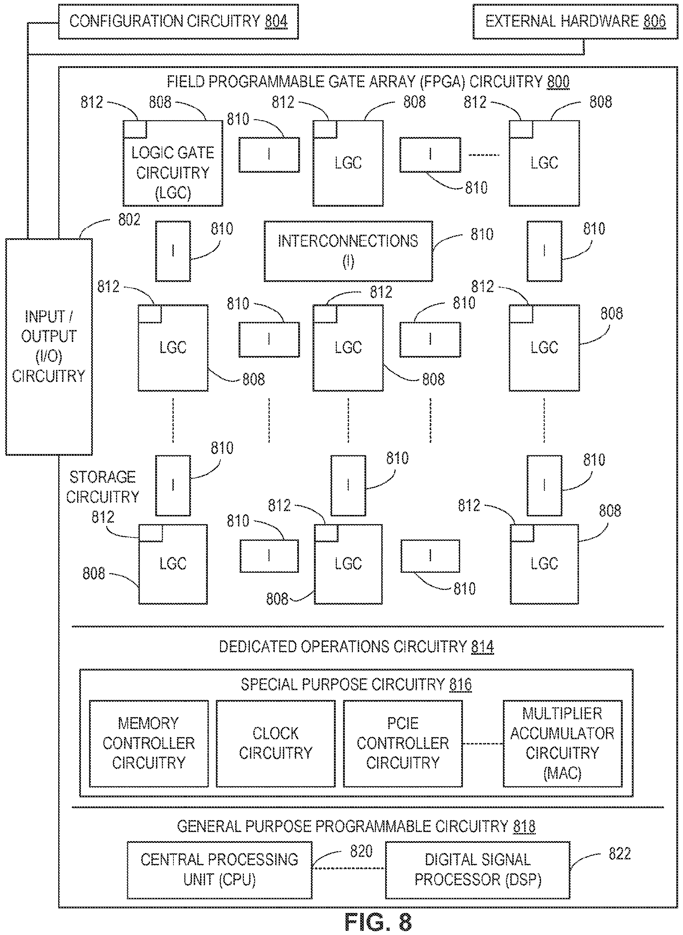

In some examples, the notification abstraction circuitry includes means for generating notification packets and/or decoding notification packets. For example, the means for generating and/or the means for decoding may be implemented by the notification abstraction circuitry 108, 134. In some examples, the notification abstraction circuitry 108, 134 may be instantiated by programmable circuitry such as the example programmable circuitry 612 of FIG. 6. For instance, the notification abstraction circuitry 108, 134 may be instantiated by the example microprocessor 700 of FIG. 7 executing machine executable instructions such as those implemented by FIGS. 4 and 5. In some examples, the notification abstraction circuitry 108, 134 may be instantiated by hardware logic circuitry, which may be implemented by an ASIC, XPU, or the FPGA circuitry 800 of FIG. 8 configured and/or structured to perform operations corresponding to the machine readable instructions. Additionally or alternatively, the notification abstraction circuitry 108, 134 may be instantiated by any other combination of hardware, software, and/or firmware. For example, the notification abstraction circuitry 108, 134 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the notification abstraction circuitry 108, 134 of FIG. 1 is illustrated in FIG. 1, one or more of the elements, processes, and/or devices illustrated in FIG. 1 may be combined, divided, re-arranged, omitted, eliminated, and/or implemented in any other way. Further, the example interface circuitry 106, the example notification abstraction circuitry 108, the example audio driver 110, the example camera driver 116, the example display driver 120, the example sensor(s) 124, the example clock 126, the example database 130, the example interface circuitry 132, the example notification abstraction circuitry 134, the example audio driver 136, the example camera driver 142, the example display driver 146, the example sensor(s) 150, the example clock 152, and/or the example database 154 of FIG. 1, may be implemented by hardware alone or by hardware in combination with software and/or firmware. Thus, for example, any of the example interface circuitry 106, the example notification abstraction circuitry 108, the example audio driver 110, the example camera driver 116, the example display driver 120, the example sensor(s) 124, the example clock 126, the example database 130, the example interface circuitry 132, the example notification abstraction circuitry 134, the example audio driver 136, the example camera driver 142, the example display driver 146, the example sensor(s) 150, the example clock 152, and/or the example database could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example notification abstraction circuitry 108, 134 of FIG. 1 may include one or more elements, processes, and/or devices in addition to, or instead of, those illustrated in FIG. 1, and/or may include more than one of any or all of the illustrated elements, processes and devices.

Flowchart(s) representative of example machine readable instructions, which may be executed by programmable circuitry to implement and/or instantiate the notification abstraction circuitry 108, 134 of FIG. 1 and/or representative of example operations which may be performed by programmable circuitry to implement and/or instantiate the notification abstraction circuitry 108, 134 of FIG. 1, are shown in FIGS. 4 and 5. The machine readable instructions may be one or more executable programs or portion(s) of one or more executable programs for execution by programmable circuitry such as the programmable circuitry 612 shown in the example processor platform 600 discussed below in connection with FIG. 6 and/or may be one or more function(s) or portion(s) of functions to be performed by the example programmable circuitry (e.g., an FPGA) discussed below in connection with FIGS. 7 and/or 8. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 4 and 5, many other methods of implementing the example notification abstraction circuitry 108, 134 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 4 and 5 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 4 is a flowchart representative of example machine readable instructions and/or example operations 400 that may be executed, instantiated, and/or performed by programmable circuitry to insert manage media across multiple devices. The example machine-readable instructions and/or the example operations 400 of FIG. 4 include the notification abstraction circuitry 108 of the host device 102 decoding a first notification packet received or obtained from the client device 102 (block 402). The notification packet was generated by the client device 102 in response to use of an application on the client device 102. The notification packet contains information indicating one or more operating parameters across one or more subsystems of the host device 102 or the client device 104 that are to be changed, modified, and/or adjusted based on the use of the application on the client device 104.

In some examples, the camera 118 of the host device 102 detects a gesture from the user (block 404). The gesture may indicate to the host device 102 that the change of the operating parameter indicated in the notification packet can be effected. In some examples, there is no gesture detection. Implementation of the change in operating parameters occurs with or without the user making a gesture.

In some examples, the change in the operating parameter is to occur in a subsystem on the client device 104. In such examples, the notification abstraction circuitry 108 of the host device 102 generates and sends or causes transmission of a second notification packet to the client device 104 (block 406). The second notification packet indicates the changes to occur on the client device 104. In some examples, the change in the operating parameter is to occur on the host device 102 and the instructions of block 406 are not included.

The notification abstraction circuitry 108 of the host device 102 effects the change in the operating parameter (block 408). For example, the notification abstraction circuitry 108 of the host device 102 invokes the audio driver 110, the camera driver 116, the display driver 120, and/or the sensor(s) 124 to change the operating parameter. The change in the operating parameter could be a change in control or functionality of one or more of the microphone 112, the speaker(s) 114, the camera 118, the display 122, and/or the sensor(s) 124, etc.

The example process 400 includes the notification abstraction circuitry 108 of the host device 102 determining if it has received or obtained another notification packet (block 410). For example, the client device 104 may send another notification packet indicating that the use of the application that prompted the first notification packet has ceased. If and/or when the notification abstraction circuitry 108 of the host device 102 receives another notification packet (block 410: YES), the notification abstraction circuitry 108 of the host device 102 reverts the operating parameter that was changed in response to the first notification packet (block 412).

In some examples, if and/or when the notification abstraction circuitry 108 of the host device 102 determines that it has not received another packet (block 410: NO), the notification abstraction circuitry 108 of the host device 102 determines if there is a time-based setting in the payload of the notification packet (block 414). The time-based setting may indicate a period of time for which the operating parameter should be changed. If and/or when the notification abstraction circuitry 108 of the host device 102 determines that there is not a time-based setting (block 414: NO), control of the process 400 returns to block 410 where the notification abstraction circuitry 108 of the host device 102 determines if another notification packet is received.

If and/or when the notification abstraction circuitry 108 of the host device 102 determines that there is time-based setting (block 414: YES), the notification abstraction circuitry 108 of the host device 102 in coordination with the clock 126 determines if a threshold amount of time (such as, for example, the time indicated in the payload of the notification packet) has passed (block 416).

If the threshold amount of time has not passed (block 416: NO), control of the process 400 holds at block 416 while the clock 126 monitors the time. If and/or when the threshold amount of time has passed (block 416: YES), the notification abstraction circuitry 108 of the host device 102 reverts the operating parameter that was changed in response to the first notification packet (block 412).

FIG. 5 is a flowchart representative of example machine readable instructions and/or example operations 500 that may be executed, instantiated, and/or performed by programmable circuitry to insert manage media across multiple devices. The example machine-readable instructions and/or the example operations 500 of FIG. 5 include the client device 104 using or activating an application (block 502). In some examples, the notification abstraction circuitry 134 of the client device 104 prepares and sends or causes transmission of a notification packet to, for example, the host device 102 (block 504). In some examples, the notification packet indicates use of the application.

In some examples, the client device 104 received or obtained a notification packet (block 506). For example, the client device 104 may receive a notification packet from the host device 102 (e.g., when there is an operating parameter on the client 104 to change). The notification abstraction circuitry 134 of the client device 104 decodes the notification packet (bock 508).

The notification abstraction circuitry 134 of the client device 104 effects a change, modification, or adjustment to an operating parameter based on the notification packet (block 510). For example, the notification abstraction circuitry 134 of the client device 104 invokes the audio driver 136, the camera driver 142, the display driver 146, and/or the sensor(s) 150 to change the operating parameter. The change in the operating parameter could be a change in control or functionality of one or more of the microphone 138, the speaker(s) 140, the camera 144, the display 148, and/or the sensor(s) 150, etc.

In some examples, the notification abstraction circuitry 134 of the client device 104 determines if there is a time-based setting in the payload of the notification packet (block 512). The time-based setting may indicate a period of time for which the operating parameter should be changed. If and/or when the notification abstraction circuitry 134 of the client device 104 determines that there is a time-based setting (block 512: YES), the notification abstraction circuitry 134 of the client device 104 in coordination with the clock 152 determines if a threshold amount of time (such as, for example, the time indicated in the payload of the notification packet) has passed (block 514).

If the threshold amount of time has not passed (block 514: NO), control of the process 500 holds at block 514 while the clock 152 monitors the time. If and/or when the threshold amount of time has passed (block 514: YES), the notification abstraction circuitry 134 of the client device 104 reverts the operating parameter that was changed in response to the notification packet (block 516).

If and/or when the notification abstraction circuitry 134 of the client device 104 determines that there is not time-based setting (block 512: NO), the notification abstraction circuitry 134 of the client device 104 determines if use of the application has ceased (block 518). If and/or when use of the application has not ceased (block 518: NO), control of the process 500 holds at block 518 while the application is in use. If and/or when the notification abstraction circuitry 134 of the client device 104 determines that use of the application has ceased (block 518: YES), the notification abstraction circuitry 134 of the client device 104 reverts the operating parameter that was changed in response to the notification packet (block 516).

FIG. 6 is a block diagram of an example programmable circuitry platform 600 structured to execute and/or instantiate the example machine-readable instructions and/or the example operations of FIGS. 4 and 5 to implement the notification abstraction circuitry of FIG. 1. The programmable circuitry platform 600 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 600 of the illustrated example includes processor or programmable circuitry 612. The programmable circuitry 612 of the illustrated example is hardware. For example, the programmable circuitry 612 can be implemented by one or more integrated circuits, logic circuits, FPGAs, microprocessors, CPUs, GPUs, DSPs, and/or microcontrollers from any desired family or manufacturer. The programmable circuitry 612 may be implemented by one or more semiconductor based (e.g., silicon based) devices. In this example, the programmable circuitry 612 implements the interface circuitry 106 and the notification abstraction circuitry 108 when the programmable circuitry 612 is implemented in the host device 102, and the programmable circuitry 612 implements the interface circuitry 132 and the notification abstraction circuitry 134 when the programmable circuitry 612 is implemented in the client device 104.

The programmable circuitry 612 of the illustrated example includes a local memory 613 (e.g., a cache, registers, etc.). The programmable circuitry 612 of the illustrated example is in communication with main memory 614, 616, which includes a volatile memory 614 and a non-volatile memory 616, by a bus 618. The volatile memory 614 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 616 may be implemented by flash memory and/or any other desired type of memory device. Access to the main memory 614, 616 of the illustrated example is controlled by a memory controller 617. In some examples, the memory controller 617 may be implemented by one or more integrated circuits, logic circuits, microcontrollers from any desired family or manufacturer, or any other type of circuitry to manage the flow of data going to and from the main memory 614, 616.

The programmable circuitry platform 600 of the illustrated example also includes interface circuitry 620. The interface circuitry 620 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 622 are connected to the interface circuitry 620. The input device(s) 622 permit(s) a user (e.g., a human user, a machine user, etc.) to enter data and/or commands into the programmable circuitry 612. The input device(s) 622 can be implemented by, for example, an audio sensor, a microphone, a camera (still or video), a keyboard, a button, a mouse, a touchscreen, a trackpad, a trackball, an isopoint device, and/or a voice recognition system.

One or more output devices 624 are also connected to the interface circuitry 620 of the illustrated example. The output device(s) 624 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 620 of the illustrated example, thus, typically includes a graphics driver card, a graphics driver chip, and/or graphics processor circuitry such as a GPU.

The interface circuitry 620 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 626. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 600 of the illustrated example also includes one or more mass storage discs or devices 628 to store firmware, software, and/or data. Examples of such mass storage discs or devices 628 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 632, which may be implemented by the machine readable instructions of FIGS. 4 and 5, may be stored in the mass storage device 628, in the volatile memory 614, in the non-volatile memory 616, and/or on at least one non-transitory computer readable storage medium such as a CD or DVD which may be removable.

FIG. 7 is a block diagram of an example implementation of the programmable circuitry 612 of FIG. 6. In this example, the programmable circuitry 612 of FIG. 6 is implemented by a microprocessor 700. For example, the microprocessor 700 may be a general-purpose microprocessor (e.g., general-purpose microprocessor circuitry). The microprocessor 700 executes some or all of the machine-readable instructions of the flowcharts of FIGS. 4 and 5 to effectively instantiate the circuitry of FIG. 2 as logic circuits to perform operations corresponding to those machine readable instructions. In some such examples, the circuitry of FIG. 1 is instantiated by the hardware circuits of the microprocessor 700 in combination with the machine-readable instructions. For example, the microprocessor 700 may be implemented by multi-core hardware circuitry such as a CPU, a DSP, a GPU, an XPU, etc. Although it may include any number of example cores 702 (e.g., 1 core), the microprocessor 700 of this example is a multi-core semiconductor device including N cores. The cores 702 of the microprocessor 700 may operate independently or may cooperate to execute machine readable instructions. For example, machine code corresponding to a firmware program, an embedded software program, or a software program may be executed by one of the cores 702 or may be executed by multiple ones of the cores 702 at the same or different times. In some examples, the machine code corresponding to the firmware program, the embedded software program, or the software program is split into threads and executed in parallel by two or more of the cores 702. The software program may correspond to a portion or all of the machine readable instructions and/or operations represented by the flowcharts of FIGS. 4 and 5.

The cores 702 may communicate by a first example bus 704. In some examples, the first bus 704 may be implemented by a communication bus to effectuate communication associated with one(s) of the cores 702. For example, the first bus 704 may be implemented by at least one of an Inter-Integrated Circuit (I2C) bus, a Serial Peripheral Interface (SPI) bus, a PCI bus, or a PCIe bus. Additionally or alternatively, the first bus 704 may be implemented by any other type of computing or electrical bus. The cores 702 may obtain data, instructions, and/or signals from one or more external devices by example interface circuitry 706. The cores 702 may output data, instructions, and/or signals to the one or more external devices by the interface circuitry 706. Although the cores 702 of this example include example local memory 720 (e.g., Level 1 (L1) cache that may be split into an L1 data cache and an L1 instruction cache), the microprocessor 700 also includes example shared memory 710 that may be shared by the cores (e.g., Level 2 (L2 cache)) for high-speed access to data and/or instructions. Data and/or instructions may be transferred (e.g., shared) by writing to and/or reading from the shared memory 710. The local memory 720 of each of the cores 702 and the shared memory 710 may be part of a hierarchy of storage devices including multiple levels of cache memory and the main memory (e.g., the main memory 614, 616 of FIG. 6). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 702 may be referred to as a CPU, DSP, GPU, etc., or any other type of hardware circuitry. Each core 702 includes control unit circuitry 714, arithmetic and logic (AL) circuitry (sometimes referred to as an ALU) 716, a plurality of registers 718, the local memory 720, and a second example bus 722. Other structures may be present. For example, each core 702 may include vector unit circuitry, single instruction multiple data (SIMD) unit circuitry, load/store unit (LSU) circuitry, branch/jump unit circuitry, floating-point unit (FPU) circuitry, etc. The control unit circuitry 714 includes semiconductor-based circuits structured to control (e.g., coordinate) data movement within the corresponding core 702. The AL circuitry 716 includes semiconductor-based circuits structured to perform one or more mathematic and/or logic operations on the data within the corresponding core 702. The AL circuitry 716 of some examples performs integer based operations. In other examples, the AL circuitry 716 also performs floating-point operations. In yet other examples, the AL circuitry 716 may include first AL circuitry that performs integer-based operations and second AL circuitry that performs floating-point operations. In some examples, the AL circuitry 716 may be referred to as an Arithmetic Logic Unit (ALU).

The registers 718 are semiconductor-based structures to store data and/or instructions such as results of one or more of the operations performed by the AL circuitry 716 of the corresponding core 702. For example, the registers 718 may include vector register(s), SIMD register(s), general-purpose register(s), flag register(s), segment register(s), machine-specific register(s), instruction pointer register(s), control register(s), debug register(s), memory management register(s), machine check register(s), etc. The registers 718 may be arranged in a bank as shown in FIG. 7. Alternatively, the registers 718 may be organized in any other arrangement, format, or structure, such as by being distributed throughout the core 702 to shorten access time. The second bus 722 may be implemented by at least one of an I2C bus, a SPI bus, a PCI bus, or a PCIe bus.

Each core 702 and/or, more generally, the microprocessor 700 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 700 is a semiconductor device fabricated to include many transistors interconnected to implement the structures described above in one or more integrated circuits (ICs) contained in one or more packages.

The microprocessor 700 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 700, in the same chip package as the microprocessor 700 and/or in one or more separate packages from the microprocessor 700.

FIG. 8 is a block diagram of another example implementation of the programmable circuitry 612 of FIG. 6. In this example, the programmable circuitry 612 is implemented by FPGA circuitry 800. For example, the FPGA circuitry 800 may be implemented by an FPGA. The FPGA circuitry 800 can be used, for example, to perform operations that could otherwise be performed by the example microprocessor 700 of FIG. 7 executing corresponding machine readable instructions. However, once configured, the FPGA circuitry 800 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 700 of FIG. 7 described above (which is a general purpose device that may be programmed to execute some or all of the machine readable instructions represented by the flowchart(s) of FIGS. 4 and 5 but whose interconnections and logic circuitry are fixed once fabricated), the FPGA circuitry 800 of the example of FIG. 8 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 4 and 5. In particular, the FPGA circuitry 800 may be thought of as an array of logic gates, interconnections, and switches. The switches can be programmed to change how the logic gates are interconnected by the interconnections, effectively forming one or more dedicated logic circuits (unless and until the FPGA circuitry 800 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 4 and 5. As such, the FPGA circuitry 800 may be configured and/or structured to effectively instantiate some or all of the operations/functions corresponding to the machine readable instructions of the flowchart(s) of FIGS. 4 and 5 as dedicated logic circuits to perform the operations/functions corresponding to those software instructions in a dedicated manner analogous to an ASIC. Therefore, the FPGA circuitry 800 may perform the operations/functions corresponding to the some or all of the machine readable instructions of FIGS. 4 and 5 faster than the general-purpose microprocessor can execute the same.

In the example of FIG. 8, the FPGA circuitry 800 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 800 of FIG. 8 may access and/or load the binary file to cause the FPGA circuitry 800 of FIG. 8 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 800 of FIG. 8 to cause configuration and/or structuring of the FPGA circuitry 800 of FIG. 8, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 800 of FIG. 8 may access and/or load the binary file to cause the FPGA circuitry 800 of FIG. 8 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 800 of FIG. 8 to cause configuration and/or structuring of the FPGA circuitry 800 of FIG. 8, or portion(s) thereof.

The FPGA circuitry 800 of FIG. 8, includes example input/output (I/O) circuitry 802 to obtain and/or output data to/from example configuration circuitry 804 and/or external hardware 806. For example, the configuration circuitry 804 may be implemented by interface circuitry that may obtain a binary file, which may be implemented by a bit stream, data, and/or machine-readable instructions, to configure the FPGA circuitry 800, or portion(s) thereof. In some such examples, the configuration circuitry 804 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 806 may be implemented by external hardware circuitry. For example, the external hardware 806 may be implemented by the microprocessor 700 of FIG. 7.

The FPGA circuitry 800 also includes an array of example logic gate circuitry 808, a plurality of example configurable interconnections 810, and example storage circuitry 812. The logic gate circuitry 808 and the configurable interconnections 810 are configurable to instantiate one or more operations/functions that may correspond to at least some of the machine readable instructions of FIGS. 4 and 5 and/or other desired operations. The logic gate circuitry 808 shown in FIG. 8 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 808 to enable configuration of the electrical structures and/or the logic gates to form circuits to perform desired operations/functions. The logic gate circuitry 808 may include other electrical structures such as look-up tables (LUTs), registers (e.g., flip-flops or latches), multiplexers, etc.

The configurable interconnections 810 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 808 to program desired logic circuits.

The storage circuitry 812 of the illustrated example is structured to store result(s) of the one or more of the operations performed by corresponding logic gates. The storage circuitry 812 may be implemented by registers or the like. In the illustrated example, the storage circuitry 812 is distributed amongst the logic gate circuitry 808 to facilitate access and increase execution speed.

The example FPGA circuitry 800 of FIG. 8 also includes example dedicated operations circuitry 814. In this example, the dedicated operations circuitry 814 includes special purpose circuitry 816 that may be invoked to implement commonly used functions to avoid the need to program those functions in the field. Examples of such special purpose circuitry 816 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 800 may also include example general purpose programmable circuitry 818 such as an example CPU 820 and/or an example DSP 822. Other general purpose programmable circuitry 818 may additionally or alternatively be present such as a GPU, an XPU, etc., that can be programmed to perform other operations.

Although FIGS. 7 and 8 illustrate two example implementations of the programmable circuitry 612 of FIG. 6, many other approaches are contemplated. For example, FPGA circuitry may include an on-board CPU, such as one or more of the example CPU 820 of FIG. 7. Therefore, the programmable circuitry 612 of FIG. 6 may additionally be implemented by combining at least the example microprocessor 700 of FIG. 7 and the example FPGA circuitry 800 of FIG. 8. In some such hybrid examples, one or more cores 702 of FIG. 7 may execute a first portion of the machine readable instructions represented by the flowchart(s) of FIGS. 4 and 5 to perform first operation(s)/function(s), the FPGA circuitry 800 of FIG. 8 may be configured and/or structured to perform second operation(s)/function(s) corresponding to a second portion of the machine readable instructions represented by the flowcharts of FIG. 4 and 5, and/or an ASIC may be configured and/or structured to perform third operation(s)/function(s) corresponding to a third portion of the machine readable instructions represented by the flowcharts of FIGS. 4 and 5.

It should be understood that some or all of the circuitry of FIG. 1 may, thus, be instantiated at the same or different times. For example, same and/or different portion(s) of the microprocessor 700 of FIG. 7 may be programmed to execute portion(s) of machine-readable instructions at the same and/or different times. In some examples, same and/or different portion(s) of the FPGA circuitry 800 of FIG. 8 may be configured and/or structured to perform operations/functions corresponding to portion(s) of machine-readable instructions at the same and/or different times.

In some examples, some or all of the circuitry of FIG. 1 may be instantiated, for example, in one or more threads executing concurrently and/or in series. For example, the microprocessor 700 of FIG. 7 may execute machine readable instructions in one or more threads executing concurrently and/or in series. In some examples, the FPGA circuitry 800 of FIG. 8 may be configured and/or structured to carry out operations/functions concurrently and/or in series. Moreover, in some examples, some or all of the circuitry of FIG. 1 may be implemented within one or more virtual machines and/or containers executing on the microprocessor 700 of FIG. 7.

In some examples, the programmable circuitry 612 of FIG. 6 may be in one or more packages. For example, the microprocessor 700 of FIG. 7 and/or the FPGA circuitry 800 of FIG. 8 may be in one or more packages. In some examples, an XPU may be implemented by the programmable circuitry 612 of FIG. 6, which may be in one or more packages. For example, the XPU may include a CPU (e.g., the microprocessor 700 of FIG. 7, the CPU 820 of FIG. 8, etc.) in one package, a DSP (e.g., the DSP 822 of FIG. 8) in another package, a GPU in yet another package, and an FPGA (e.g., the FPGA circuitry 800 of FIG. 8) in still yet another package.

A block diagram illustrating an example software distribution platform 905 to distribute software such as the example machine readable instructions 632 of FIG. 6 to other hardware devices (e.g., hardware devices owned and/or operated by third parties from the owner and/or operator of the software distribution platform) is illustrated in FIG. 9. The example software distribution platform 905 may be implemented by any computer server, data facility, cloud service, etc., capable of storing and transmitting software to other computing devices. The third parties may be customers of the entity owning and/or operating the software distribution platform 905. For example, the entity that owns and/or operates the software distribution platform 905 may be a developer, a seller, and/or a licensor of software such as the example machine readable instructions 632 of FIG. 6. The third parties may be consumers, users, retailers, OEMs, etc., who purchase and/or license the software for use and/or re-sale and/or sub-licensing. In the illustrated example, the software distribution platform 905 includes one or more servers and one or more storage devices. The storage devices store the machine readable instructions 632, which may correspond to the example machine readable instructions of FIGS. 4 and 5, as described above. The one or more servers of the example software distribution platform 905 are in communication with an example network 910, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 632 from the software distribution platform 905. For example, the software, which may correspond to the example machine readable instructions of FIGS. 4 and 5, may be downloaded to the example programmable circuitry platform 600, which is to execute the machine readable instructions 632 to implement the notification abstraction circuitry. In some examples, one or more servers of the software distribution platform 905 periodically offer, transmit, and/or force updates to the software (e.g., the example machine readable instructions 632 of FIG. 6) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that manage media across multiple devices. Disclosed systems, apparatus, articles of manufacture, and/or methods improve the efficiency of a computing device by streamlining the use of multiple devices in collaboration and/or by selectively changing operating parameters of one or more electronic devices, which saves processing resources. Disclosed systems, apparatus, articles of manufacture, and/or methods are accordingly directed to one or more improvement(s) in the operation of a machine such as a computer or other electronic and/or mechanical device.

Examples disclosed herein enhance audio, camera, display, and sensors experiences during collaboration of multiple devices. Examples disclosed herein can be integrated into to other application stacks. Examples disclosed herein also have low maintenance, minimal operating system dependency, and can be plug and play. The seamless connection of devices (e.g., personal computer, phone, tablet, etc.) provide true cross-platform compatibility. Examples disclosed herein enhance a user's productivity and communication by offering a focused, unified work and communication experience and enabling multi-tasking across devices.

Systems, apparatus, articles of manufacture, and methods are disclosed for multi device media management. Example 1 includes an electronic device disclosed herein includes interface circuitry to obtain a notification packet from a client device; machine readable instructions; and at least one processor circuit to be programmed by the machine readable instructions to: to identify a subsystem of the electronic device to be controlled based on the notification packet; and change an operating parameter of the subsystem based on the notification packet.

Example 2 includes the electronic device of Example 1, wherein one or more of the least one processor circuit is to change the operating parameter by invoking a driver, the driver to control a camera, and the notification packet includes information to control the camera.

Example 3 includes the electronic device of any of Examples 1 or 2, wherein one or more of the least one processor circuit is to change the operating parameter by invoking a driver, the driver to control a microphone, and the notification packet includes information to control the microphone.

Example 4 includes the electronic device of any of Examples 1-3, wherein one or more of the least one processor circuit is to change the operating parameter by invoking a driver, the driver to control a speaker, and the notification packet includes information to control the speaker.

Example 5 includes the electronic device of any of Examples 1-4, wherein one or more of the least one processor circuit is to change the operating parameter by invoking a driver, the driver to control screen brightness, and the notification packet includes information to control screen brightness.

Example 6 includes the electronic device of any of Examples 1-5, wherein the client device is a mobile phone and the notification packet is created in response to a phone call received at the client device.

Example 7 includes the electronic device of Example 6, wherein the notification packet is a first notification packet, and one or more of the at least one processor circuit is to: decode a second notification packet from the client device; and invoke a driver on the electronic device to revert the operating parameter of the subsystem of the electronic device based on the second notification packet, the second notification packet created when the phone call ends.

Example 8 includes the electronic device of any of Examples 1-7, wherein the notification packet is a first notification packet, and one or more of the at least one processor circuit is to: decode a second notification packet from the client device; and invoke a driver on the electronic device to revert the operating parameter of the subsystem of the electronic device based on the second notification packet.

Example 9 includes the electronic device of any of Examples 1-8, wherein the one or more of the at least one processor circuit is to revert the operating parameter of the subsystem after a threshold period of time.

Example 10 includes the electronic device of any of Examples 1-9, wherein the notification packet is a first notification packet, and one or more of the at least one processor circuit is to: detect a user gesture; and cause the interface circuitry to transmit a second notification packet to the client device based on detection of the user gesture, the second notification packet including information to change an operating parameter of the client device.

Example 11 includes a non-transitory machine readable storage medium including instructions to cause at least one programmable circuit to at least: decode a notification packet from a client device; identify a subsystem of a device to be controlled based on the notification packet; and change an operating parameter of the subsystem based on the notification packet.

Example 12 includes the storage medium of Example 11, wherein the instructions cause one or more of the at least one programmable circuit to invoke a driver, the driver to control a camera, and the notification packet includes information to control the camera.

Example 13 includes the storage medium of any of Examples 11 or 12, wherein the instructions cause one or more of the at least one programmable circuit to invoke a driver, the driver to control a microphone, and the notification packet includes information to control the microphone.

Example 14 includes the storage medium of any of Examples 11-13, wherein the instructions cause one or more of the at least one programmable circuit to invoke a driver, the driver to control a speaker, and the notification packet includes information to control the speaker.

Example 15 includes the storage medium of any of Examples 11-14, wherein the instructions cause one or more of the at least one programmable circuit to invoke a driver, the driver to control screen brightness, and the notification packet includes information to control screen brightness.

Example 16 includes the storage medium of any of Examples 11-15, wherein the notification packet is a first notification packet, the client device is a mobile phone, and the first notification packet is created based on a phone call received at the client device, and the instructions cause one or more of the at least one the programmable circuit to: decode a second notification packet from the client device; and revert the operating parameter of the subsystem based on the second notification packet, the second notification packet created when the phone call ends.

Example 17 includes the storage medium of any of Examples 11-16, wherein the notification packet is a first notification packet, and the instructions cause one or more of the at least one the programmable circuit to: decode a second notification packet from the client device; and revert the operating parameter of the subsystem based on the second notification packet.

Example 18 includes the storage medium of any of Examples 11-17, wherein the notification packet is a first notification packet, and the instructions cause one or more of the at least one the programmable circuit to: detect a user gesture; and deliver a second notification packet to the client device based on detection of the user gesture, the second notification packet including information to change an operating parameter of the client device.

Example 19 includes a method that includes decoding a notification packet from a first electronic device to identify a subsystem of a second electronic device to be controlled based on the notification packet; and invoking a driver on the second electronic device to change an operating parameter of the subsystem of the second electronic device based on the notification packet.

Example 20 includes the method of Example 19, wherein the notification packet is a first notification packet, and the method includes: decoding a second notification packet from the first electronic device; and invoking the driver on the second electronic device to revert the operating parameter of the subsystem of the second electronic device based on the second notification packet.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An electronic device comprising:
interface circuitry to obtain a notification packet from a client device;
machine readable instructions; and
at least one processor circuit to be programmed by the machine readable instructions to:
to identify a subsystem of the electronic device to be controlled based on the notification packet; and
change an operating parameter of the subsystem based on the notification packet.

2. The electronic device of claim 1, wherein one or more of the least one processor circuit is to change the operating parameter by invoking a driver, the driver to control a camera, and the notification packet includes information to control the camera.

3. The electronic device of any preceding claim, wherein one or more of the least one processor circuit is to change the operating parameter by invoking a driver, the driver to control a microphone, and the notification packet includes information to control the microphone.

4. The electronic device of any preceding claim, wherein one or more of the least one processor circuit is to change the operating parameter by invoking a driver, the driver to control a speaker, and the notification packet includes information to control the speaker.

5. The electronic device of any preceding claim, wherein one or more of the least one processor circuit is to change the operating parameter by invoking a driver, the driver to control screen brightness, and the notification packet includes information to control screen brightness.

6. The electronic device of any preceding claim, wherein the client device is a mobile phone and the notification packet is created in response to a phone call received at the client device.

7. The electronic device of claim 6, wherein the notification packet is a first notification packet, and one or more of the at least one processor circuit is to:
decode a second notification packet from the client device; and
invoke a driver on the electronic device to revert the operating parameter of the subsystem of the electronic device based on the second notification packet, the second notification packet created when the phone call ends.

8. The electronic device of any preceding claim, wherein the notification packet is a first notification packet, and one or more of the at least one processor circuit is to:
decode a second notification packet from the client device; and
invoke a driver on the electronic device to revert the operating parameter of the subsystem of the electronic device based on the second notification packet.

9. The electronic device of any preceding claim, wherein the one or more of the at least one processor circuit is to revert the operating parameter of the subsystem after a threshold period of time.

10. The electronic device of any preceding claim, wherein the notification packet is a first notification packet, and one or more of the at least one processor circuit is to:
detect a user gesture; and
cause the interface circuitry to transmit a second notification packet to the client device based on detection of the user gesture, the second notification packet including information to change an operating parameter of the client device.

11. A method comprising:
decoding a notification packet from a first electronic device to identify a subsystem of a second electronic device to be controlled based on the notification packet; and
invoking a driver on the second electronic device to change an operating parameter of the subsystem of the second electronic device based on the notification packet.

12. The method of claim 11, wherein the notification packet is a first notification packet, and the method includes:
decoding a second notification packet from the first electronic device; and
invoking the driver on the second electronic device to revert the operating parameter of the subsystem of the second electronic device based on the second notification packet.

13. The method of claim 12, wherein the second electronic device is a mobile phone, the first notification packet is created in response to a phone call received at the second electronic device, and the second notification packets is created when the phone call ends.

14. The method of any of claims 11-13, further including reverting the operating parameter after a threshold period of time.

15. Machine-readable storage including machine-readable instructions, when executed, to implement a method or realize an apparatus or electronic device as claimed in any preceding claim.
